# EUROPÄISCHE PATENTSCHRIFT

(11) **EP 3 262 311 B1**
(45) Veröffentlichungstag und Bekanntmachung des Hinweises auf die Patenterteilung: **08.07.2020**
(21) Anmeldenummer: 16712196.1
(22) Anmeldetag: 08.02.2016
(51) Int. Cl.: F16D 25/08

(54) **AKTUATOR ZUR BETÄTIGUNG EINER REIBKUPPLUNG**
ACTUATOR FOR FRICTION CLUTCH CONTROL
ACTIONNEUR POUR ACTIONNEMENT D'UN EMBRAYAGE À FRICTION

(30) Priorität: 24.02.2015 DE 102015203294; 25.02.2015 DE 102015203377; 15.04.2015 DE 102015206703
(43) Veröffentlichungstag der Anmeldung: 03.01.2018
(73) Patentinhaber: Schaeffler Technologies AG & Co. KG, 91074 Herzogenaurach (DE)
(72) Erfinder: HEYD, Jean-Francois, 67000 Strasburg (FR); HERRMANN, Tim, 76461 Muggensturm (DE)
(86) Internationale Anmeldenummer: PCT/DE2016/200079
(87) Internationale Veröffentlichungsnummer: WO 2016/134712

(56) Entgegenhaltungen:
- EP-A2- 1 489 385
- DE-A1- 4 341 810
- DE-A1-102008 057 107

## Beschreibung

Die vorliegende Erfindung betrifft einen Aktuator zur Betätigung einer Reibkupplung, die der Unterbrechung eines Drehmomentflusses von einem Antriebsmotor auf einen Antriebsstrang eines Kraftfahrzeugs dient.

Zur Betätigung von Reibkupplungen, beispielsweise Einscheibentrockenkupplungen oder Doppelkupplungen, werden Aktuatoren zum Einrücken und/oder zum Ausrücken verwendet. Bei einem Aktuator kann es sich beispielsweise um einen Geberzylinder oder Nehmerzylinder einer Betätigungseinrichtung der Reibkupplung handeln. Aus der DE 10 2012 217 343 A1 ist beispielsweise ein Geberzylinder mit einem in einem Gehäuse axial verschiebbar gelagerten Kolben bekannt, wobei der Kolben bei Betätigung in einem vom Gehäuse und Kolben gebildeten Druckraum Druck aufbaut. Der Geberzylinder weist eine Sensorik mit einem im Gehäuse angeordneten Sensor und einem am Kolben befestigten Magneten zur Positionsbestimmung des Kolbens in dem Gehäuse auf. Bei dem Magnet handelt es sich um einen Neodyn-Eisen-Bore-, SmCo-, AlNiCo- oder Ferritmagnet, der an einer in Richtung zum Druckraum weisenden Seite des Kolbens mit dem Kolben verbunden ist. Nachteilig an diesem bekannten Geberzylinder ist, dass der Magnet für große Stellwege des Kolbens keine ausreichend hohe magnetische Flussdichte bereitstellt.

Andere Aktuatoren mit zwei Magneten sind aus der DE 43 41 810 A1 und der DE 10 2008 057 107 A1 bekannt.

Aufgabe der Erfindung ist es daher, die mit Bezug auf den Stand der Technik geschilderten Probleme zumindest teilweise zu lösen und insbesondere einen Aktuator zur Betätigung einer Reibkupplung anzugeben, bei dem auch bei großen Stellwegen eines Kolbens die Position des Kolbens in einem Gehäuse des Aktuators zuverlässig detektierbar ist.

Diese Aufgabe wird gelöst mit einem Aktuator gemäß den Merkmalen des unabhängigen Anspruchs. Weitere vorteilhafte Ausgestaltungen der Erfindung sind in den abhängig formulierten Ansprüchen angegeben. Es ist darauf hinzuweisen, dass die in den abhängig formulierten Ansprüchen einzeln aufgeführten Merkmale in beliebiger technologisch sinnvoller Weise miteinander kombiniert werden können und weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Der erfindungsgemäße Aktuator zur Betätigung einer Reibkupplung weist ein Gehäuse und einen in dem Gehäuse bewegbaren Kolben auf, wobei an dem Kolben mindestens ein erster Magnet und ein zweiter Magnet befestigt sind, die in einer radialen Bewegungsrichtung des Kolbens voneinander beabstandet und in entgegengesetzte Richtungen magnetisiert sind und wobei an dem Gehäuse ein Hall-Sensor zur Messung eines Magnetfelds des ersten Magnets und zweiten Magnets angeordnet ist.

Bei der Reibkupplung handelt es sich insbesondere um eine Einscheibentrockenkupplung oder eine Doppelkupplung. Solche Reibkupplungen dienen der Unterbrechung eines Drehmomentflusses von einem Antriebsmotors auf einen Antriebsstrang eines Kraftfahrzeugs. Die Reibkupplung ist durch einen Aktuator einrückbar und/oder ausrückbar, um einen Drehmomentfluss von einem Antriebsmotor auf einen Antriebsstrang des Kraftfahrzeugs zu aktivieren und/oder zu deaktivieren. Bei dem Aktuator kann es sich insbesondere um einen, beispielweise mit einem Kupplungspedal verbundenen, Geberzylinder oder einen Nehmerzylinder handeln. Der Nehmerzylinder kann dabei unmittelbar mit der Reibkupplung verbunden sein. Der Aktuator weist ein Gehäuse auf, das bevorzugt zumindest teilweise aus Kunststoff und/oder Metall besteht. In dem Gehäuse ist ein Kolben bewegbar angeordnet. Im Falle eines Geberzylinders kann mittels des Kolbens ein Druck in einem Druckraum für ein hydraulisches Fluid aufgebaut werden, durch den über eine Hydraulikleitung ein Kolben eines Nehmerzylinders bewegbar ist. Im Falle eines Nehmerzylinders kann der Kolben direkt oder indirekt zur Betätigung der Reibkupplung auf die Reibkupplung einwirken.

An dem Kolben ist mindestens ein erster Magnet und ein zweiter Magnet befestigt, bei denen es sich beispielsweise um Neodyn-Eisen-Bore Magnete oder um SmCo-, AlNiCo- oder Ferritmagnete handeln kann. Der erste Magnet und der zweite Magnet sind insbesondere Teil einer Sensorvorrichtung, die dazu dient, eine Position oder einen Weg des Kolbens in dem Gehäuse des Aktuators zu erfassen. Der erste Magnet und der zweite Magnet sind in einer Bewegungsrichtung des Kolbens, bei der es sich insbesondere um eine Längsrichtung des Kolbens handelt, mit einem Abstand voneinander beabstandet. Der Abstand beträgt bevorzugt 5 mm (Millimeter) bis 20 mm, bevorzugt 10 mm bis 15 mm. Der erste Magnet und/oder zweite Magnet weisen bevorzugt eine Länge von 5 mm bis 10 mm, bevorzugt 7 mm, eine Höhe von 5 mm bis 10 mm, bevorzugt 6 mm, und eine Tiefe von 2 mm bis 8 mm, bevorzugt 5 mm, auf. Weiterhin sind der erste Magnet und der zweite Magnet in entgegengesetzte Richtungen magnetisiert. Dies bedeutet insbesondere, dass der Nordpol und Südpol des ersten Magnets in entgegengesetzte Richtungen weisen, wie der Nordpol und Südpol des zweiten Magnets. Durch den ersten Magnet und den zweiten Magnet kann dadurch ein Magnetfeld generiert werden, das trotz der Verwendung relativ kleinvolumiger und dadurch kostengünstiger Magnete eine hohe magnetische Flussdichte über einen großen Stellweg des Kolbens und darüber hinaus eine sehr gute Linearität aufweist. Zur Messung des Magnetfeld beziehungsweise der magnetischen Flussdichte des Magnetfelds des ersten Magnets und des zweiten Magnets ist an dem Gehäuse ein Hall-Sensor angeordnet. Ein solcher Hall-Sensor nutzt den sogenannten Hall-Effekt zur Messung von Magnetfeldern. Durch eine axiale Bewegung des ersten Magnets und zweiten Magnets mit dem Kolben kann durch den Hall-Sensor eine damit korrelierende Änderung des Magnetfelds im Bereich des Hall-Sensors erfasst werden. Diese Änderung bewirkt eine Änderung der Hallspannung.

Erfindungsgemäß sind der erste Magnet und der zweite Magnet in einer radialen Richtung des Kolbens magnetisiert. Bei der radialen Richtung handelt es sich insbesondere um eine Richtung, die orthogonal zu der Bewegungsrichtung des Kolbens orientiert ist. Hierdurch werden die Magnetfeldlinien des Magnetfelds ausgehend von dem ersten Magnet und zweiten Magnet radial nach außen geführt und könne dort von dem Hall-Sensor erfasst werden.

Zudem ist es vorteilhaft, wenn der erste Magnet und der zweite Magnet senkrecht zu der Bewegungsrichtung des Kolbens magnetisiert sind.

Weiterhin ist es vorteilhaft, wenn zwischen dem Hall-Sensor und dem ersten Magnet sowie dem Hall-Sensor und dem zweiten Magnet ein Luftspalt ausgebildet ist. Der Luftspalt ist insbesondere zwischen dem Kolben und dem Gehäuse ausgebildet. Der Luftspalt umgibt den Kolben zumindest teilweise und ist insbesondere hohlzylindrisch ausgebildet. Der Luftspalt weist insbesondere eine Stärke von 2 mm bis 10 mm, bevorzugt 5 mm, auf.

Ebenfalls vorteilhaft ist es, wenn der Luftspalt zwischen dem Kolben und dem Gehäuse ausgebildet ist.

Des Weiteren ist es vorteilhaft, wenn ein Abstand zwischen dem ersten Magnet und dem zweiten Magnet einstellbar ist. Dies bedeutet mit anderen Worten, dass der Abstand zwischen dem ersten Magnet und dem zweiten Magnet variierbar ist. Hierdurch kann je nach Anforderung der Abstand zwischen dem ersten Magnet und dem zweiten Magnet an eine erforderliche Bewegungsstrecke des Kolbens in dem Gehäuse angepasst werden, ohne dass zusätzlicher magnetischer Werkstoff erforderlich ist. Hierdurch kann insbesondere die erforderliche Variantenvielfalt der Magnete reduziert werden, wodurch Kosten gesenkt werden können.

Ebenfalls vorteilhaft ist es, wenn es sich bei dem ersten Magnet und dem zweiten Magnet um Blockmagnete handelt. Der erste Magnet und der zweite Magnet bilden zusammen insbesondere einen Doppelblockmagnet. Der erste Magnet und der zweite Magnet sind insbesondere an einer Umfangsfläche des Kolbens angeordnet.

Zudem ist es vorteilhaft, wenn der erste Magnet oder der zweite Magnet in einer Fassung angeordnet ist. Bevorzugt können der erste Magnet und der zweite Magnet in einer gemeinsamen Fassung angeordnet sein. Durch die Fassung sind der erste Magnet und/oder der zweite Magnet besonders leicht an dem Kolben befestigbar, wodurch sich der Montageaufwand reduziert. Die Fassung kann auch dazu vorgesehen sein, die Magnetfeldlinien des Magnetfelds des ersten Magnets und zweiten Magnets zu führen.

Weiterhin ist es vorteilhaft, wenn die Fassung zumindest teilweise aus einem magnetischen oder magnetisierbaren Material besteht.

Einem weiteren Aspekt der Erfindung folgend wird auch eine Betätigungseinrichtung für eine Reibkupplung angegeben, die zumindest einen erfindungsgemäßen Aktuator aufweist. Bei dem Aktuator kann es sich insbesondere um einen Geberzylinder und/oder Nehmerzylinder handeln, mit dem eine Reibkupplung einrückbar und/oder ausrückbar ist.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigen schematisch:
- Fig. 1:: einen Aktuator im Längsschnitt;
- Fig. 2:: eine Darstellung des Hall-Sensors, des ersten Magnets und zweiten Magnets des Aktuators;
- Fig. 3:: ein Magnetfeld des ersten Magnets und zweiten Magnets des Aktuators;
- Fig. 4a-4c:: einen Verlauf der Flussdichte, Gesamtflussdichte und Messgröße am Hall-Sensors; und
- Fig. 5a-5b:: Kurvenscharen einer Gesamtflussdichte und einer Messgröße.

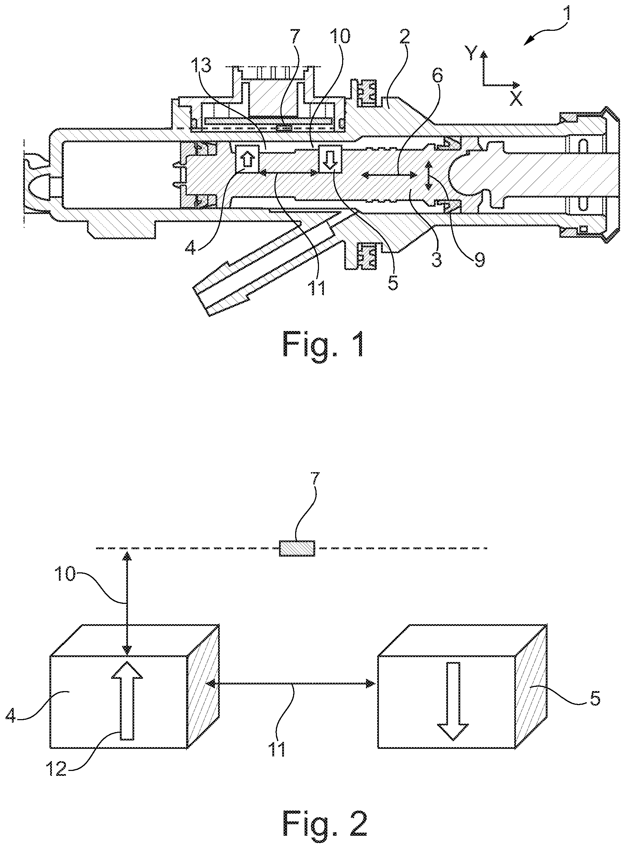

Die Fig. 1 zeigt einen Aktuator 1 in einem Längsschnitt. Der Aktuator 1 weist ein Gehäuse 2 und einen in dem Gehäuse 2 bewegbaren Kolben 3 auf. Der Kolben 3 ist in dem Gehäuse 2 in einer Bewegungsrichtung 6, das heißt in der X-Richtung, bewegbar. An dem Kolben 3 ist ein erster Magnet 4 und ein zweiter Magnet 5 an einer Umfangsfläche 13 des Kolbens 3 befestigt. Der erste Magnet 4 und der zweite Magnet 5 sind in der Bewegungsrichtung 6 des Kolbens 3 mit einem Abstand 11 voneinander beabstandet. Weiterhin sind der erste Magnet 4 und der zweite Magnet 5 in entgegengesetzte Richtungen magnetisiert. Die Magnetisierung des ersten Magnets 4 und des zweiten Magnets 5 ist in eine radiale Richtung 9 des Kolbens 3, das heißt in Y-Richtung, orientiert. Weiterhin ist in dem Gehäuse 2 ein Hall-Sensor 7 angeordnet, zwischen dem und den beiden Magneten 4, 5 ein Luftspalt 10 ausgebildet ist.

Die Fig. 2 zeigt den Hall-Sensor 7, den ersten Magnet 4 und den zweiten Magnet 5 des in der Fig. 1 gezeigten Aktuators 1. Der erste Magnet 4 und der zweite Magnet 5 sind als Blockmagnete ausgebildet und mit dem Abstand 11 voneinander beabstandet. Der Abstand 11 entscheidet über den möglichen detektierbaren Weg des in der Fig. 1 gezeigten Kolbens 3 in dem Gehäuse 2. Weiterhin ist zwischen dem Hall-Sensor 7 und dem ersten Magnet 4 sowie dem Hall-Sensor 7 und dem zweiten Magnet 5 der Luftspalt 10 ausgebildet. Der erste Magnet 4 und der zweite Magnet 5 weisen jeweils entgegengesetzte Magnetisierungsrichtungen 12 auf, die hier mit einem Pfeil dargestellt sind. Der Luftspalt 10 kann von dem Hall-Sensor 7 gemessen werden, indem sein Abstand zur Verbindungslinie der beiden Magnete 4, 5 gemessen wird. Der erste Magnet 4 und der zweite Magnet 5 sind vorteilhafter Weise identisch aufgebaut und haben Abmessungen von circa 7 x 5 x 6 mm. Die Magnete sind etwa 10 - 15 mm voneinander und etwa 5 mm vom Hall-Sensor 7 beabstandet. Der Abstand 11 wird immer von einer Oberfläche aus gemessen.

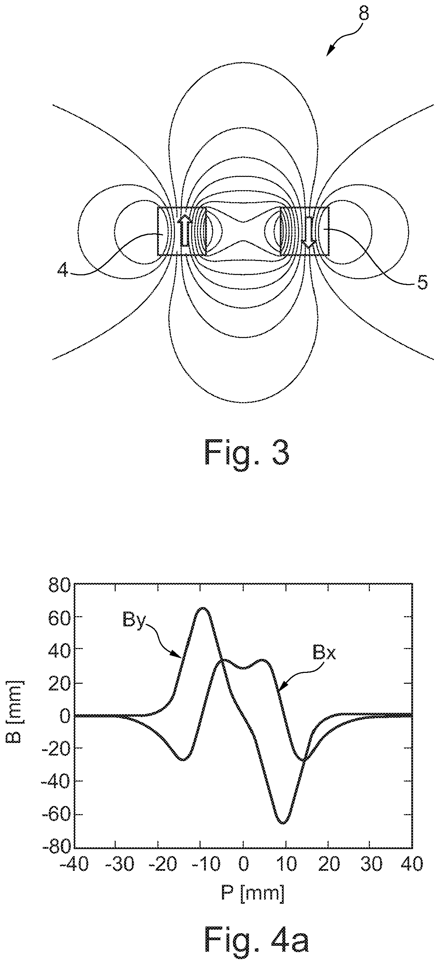

Die Fig. 3 zeigt ein Magnetfeld mit Magnetfeldlinien 8 des ersten Magnets 4 und des zweiten Magnets 5.

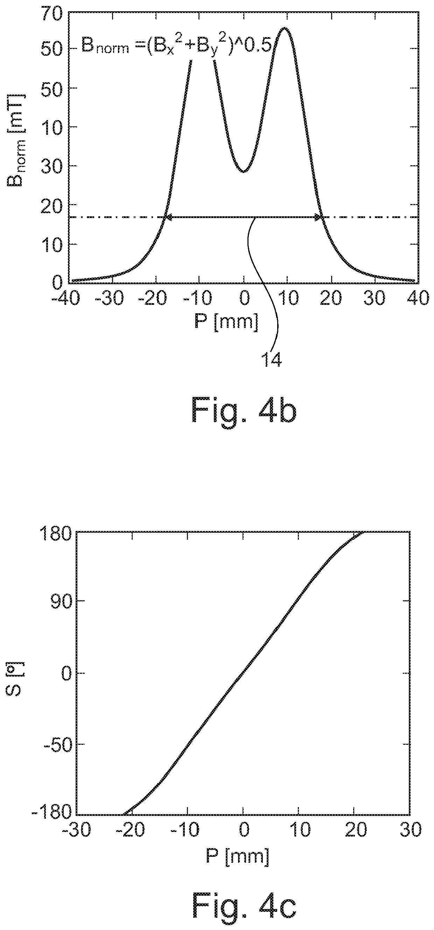

Die Fig. 4a zeigt den Verlauf der radialen magnetischen Flussdichte By und der axialen magnetischen Flussdichte Bx. In der Fig. 4b ist der entsprechend messbare Verlauf des resultierenden Magnetfelds Bnorm über eine Verlagerung des Kolbens entlang der X-Achse gezeigt. Der nutzbare Bereich 14 ist durch einen vorgegebenen minimalen Magnetfeldwert bestimmt. Der nutzbare Bereich 14 weist dabei in der Regel eine magnetische Flussdichte zwischen 10 und 20 mT (Millitesla) auf. Auf der X-Achse der Graphen ist hier jeweils der Weg des Kolbens 3 in axialer Richtung dargestellt, wobei der mittlere Weg bei 0 mm einer mittleren Auslenkung entspricht. Die Ruheposition des Kolbens 3 liegt dagegen bei einem negativen Weg, beispielsweise bei - 20 mm, wobei diese Ruheposition so gewählt sein sollte, dass möglichst noch Weg darüber hinaus durch den Hall-Sensor 7 detektierbar ist. Die Fig. 4c zeigt einen linearisierten Verlauf eines Messsignals, welches tatsächlich zur Messung verwendet wird und durch den Arctan der beiden Magnetfeldkomponenten gebildet wird.

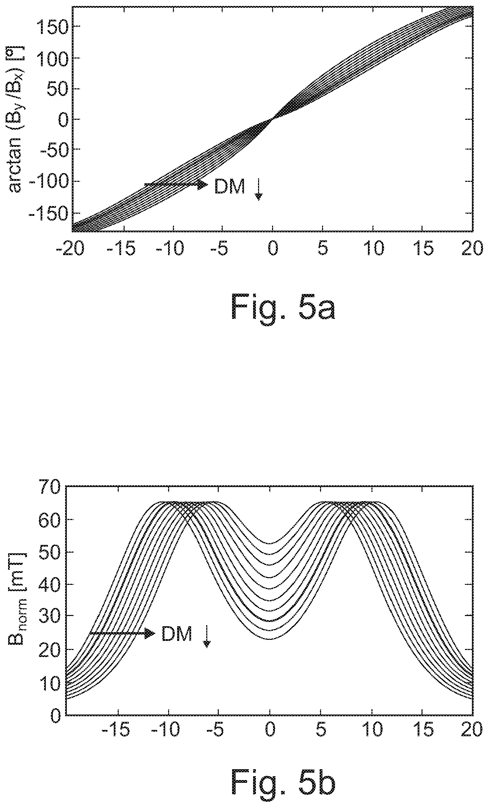

Die Fig. 5a und 5b zeigen die resultierende Gesamtflussdichte und die daraus abgeleitete linearisierte Messgröße am Hallsensor 7.

In den Fig. 5a und 5b sind die Kurvenscharen der Messgröße Arctan (By/Bx) (Fig. 5a) und der Gesamtflussdichte (Fig. 5b) in Abhängigkeit vom Abstand 11 der Magnete 4, 5 in axialer Richtung gezeigt. Es ist erkennbar, dass der Abstand 11 ein Optimum für einen gegebenen Luftspalt 10 hat.

Wie sich aus den hier gezeigten Kurvenverläufen ergibt, liefert diese Anordnung von zwei radial magnetisierten Blockmagneten eine hohe Flussdichte für eine lange Wegstrecke. Auch die Linearität ist gegenüber den bisher bekannten Lösungen verbessert.

### Bezugszeichenliste

- 1: Aktuator
- 2: Gehäuse
- 3: Kolben
- 4: erster Magnet
- 5: zweiter Magnet
- 6: Bewegungsrichtung
- 7: Hall-Sensor
- 8: Magnetfeldlinien
- 9: radiale Richtung
- 10: Luftspalt
- 11: Abstand
- 12: Magnetisierungsrichtung
- 13: Umfangsfläche
- 14: nutzbarer Bereich

## Patentansprüche

1. Aktuator (1) zur Betätigung einer Reibkupplung, aufweisend ein Gehäuse (2) und einen in dem Gehäuse (2) bewegbaren Kolben (3), wobei an dem Kolben (3) mindestens ein erster Magnet (4) und ein zweiter Magnet (5) befestigt sind, die in einer Bewegungsrichtung (6) des Kolbens (3) voneinander beabstandet sind,
**dadurch gekennzeichnet dass**, der erste Magnet (4) und der zweite Magnet (5) in einer radialen Richtung (9) des Kolbens (3) in entgegengesetzte Richtungen magnetisiert sind und wobei an dem Gehäuse (2) ein Hall-Sensor (7) zur Messung eines Magnetfelds des ersten Magnets (4) und zweiten Magnets (5) angeordnet ist.

2. Aktuator (1) nach Anspruch 1, wobei der erste Magnet (4) und der zweite Magnet (5) senkrecht zu der Bewegungsrichtung (6) des Kolbens (3) magnetisiert sind.

3. Aktuator (1) nach Anspruch 1 oder 2, wobei zwischen dem Hall-Sensor (7) und dem ersten Magnet (4) sowie dem Hall-Sensor (7) und dem zweiten Magnet (5) ein Luftspalt (10) ausgebildet ist.

4. Aktuator (1) nach Anspruch 3, wobei der Luftspalt (10) zwischen dem Kolben (3) und dem Gehäuse (2) ausgebildet ist.

5. Aktuator (1) nach einem der Ansprüche 1 bis 4, wobei ein Abstand (11) zwischen dem ersten Magnet (4) und dem zweiten Magnet (5) einstellbar ist.

6. Aktuator (1) nach einem der Ansprüche 1 bis 5, wobei es sich bei dem ersten Magnet (4) und dem zweiten Magnet (5) um Blockmagnete handelt.

7. Aktuator (1) nach einem der Ansprüche 1 bis 6, wobei der erste Magnet (4) oder der zweite Magnet (5) in einer Fassung angeordnet ist.

8. Aktuator (1) nach Anspruch 7, wobei die Fassung zumindest teilweise aus einem magnetischen oder magnetisierbaren Material besteht.

9. Betätigungseinrichtung für eine Reibkupplung, aufweisend zumindest einen Aktuator (1) nach einem der Ansprüche 1 bis 8.

## Claims

1. Actuator (1) for the actuation of a friction clutch, having a housing (2) and a piston (3) which can be moved in the housing (2), at least one first magnet (4) and one second magnet (5) being fastened to the piston (3), which magnets (4, 5) are spaced apart from one another in a movement direction (6) of the piston (3), **characterized in that** the first magnet (4) and the second magnet (5) are magnetized in opposed directions in a radial direction (9) of the piston (3), and a Hall sensor (7) for measuring a magnetic field of the first magnet (4) and second magnet (5) being arranged on the housing (2).

2. Actuator (1) according to Claim 1, the first magnet (4) and the second magnet (5) being magnetized perpendicularly with respect to the movement direction (6) of the piston (3).

3. Actuator (1) according to Claim 1 or 2, an air gap (10) being configured between the Hall sensor (7) and the first magnet (4) and between the Hall sensor (7) and the second magnet (5).

4. Actuator (1) according to Claim 3, the air gap (10) being configured between the piston (3) and the housing (2) .

5. Actuator (1) according to one of Claims 1 to 4, it being possible for a spacing (11) to be set between the first magnet (4) and the second magnet (5).

6. Actuator (1) according to one of Claims 1 to 5, the first magnet (4) and the second magnet (5) being block magnets.

7. Actuator (1) according to one of Claims 1 to 6, the first magnet (4) or the second magnet (5) being arranged in a mount.

8. Actuator (1) according to Claim 7, the mount consisting at least partially of a magnetic or magnetizable material.

9. Actuating device for a friction clutch, having at least one actuator (1) according to one of Claims 1 to 8.

## Revendications

1. Actionneur (1) permettant d'actionner un embrayage à friction, comprenant un carter (2) et un piston (3) pouvant être déplacé dans le carter (2), au moins un premier aimant (4) et un deuxième aimant (5) étant fixés au piston (3) et étant espacés l'un par rapport à l'autre dans une direction de déplacement (6) du piston (3), **caractérisé en ce que** le premier aimant (4) et le deuxième aimant (5) sont aimantés dans des directions opposées, dans une direction radiale (9) du piston (3), et un capteur à effet Hall (7) pour mesurer un champ magnétique du premier aimant (4) et du deuxième aimant (5) étant disposé sur le carter (2).

2. Actionneur (1) selon la revendication 1, dans lequel le premier aimant (4) et le deuxième aimant (5) sont aimantés perpendiculairement à la direction de déplacement (6) du piston (3).

3. Actionneur (1) selon la revendication 1 ou 2, dans lequel un entrefer (10) est réalisé entre le capteur à effet Hall (7) et le premier aimant (4) ainsi qu'entre le capteur à effet Hall (7) et le deuxième aimant (5).

4. Actionneur (1) selon la revendication 3, dans lequel l'entrefer (10) est réalisé entre le piston (3) et le carter (2).

5. Actionneur (1) selon l'une quelconque des revendications 1 à 4, dans lequel une distance (11) entre le premier aimant (4) et le deuxième aimant (5) est réglable.

6. Actionneur (1) selon l'une quelconque des revendications 1 à 5, dans lequel le premier aimant (4) et le deuxième aimant (5) sont des aimants en blocs.

7. Actionneur (1) selon l'une quelconque des revendications 1 à 6, dans lequel le premier aimant (4) ou le deuxième aimant (5) est disposé dans une douille.

8. Actionneur (1) selon la revendication 7, dans lequel la douille est composée au moins en partie d un matériau magnétique ou magnétisable.

9. Dispositif d'actionnement pour un embrayage à friction, comprenant au moins un actionneur (1) selon l'une quelconque des revendications 1 à 8.
